(19) **Europäisches Patentamt / European Patent Office / Office européen des brevets**

(11) **EP 1 949 055 B1**

(12) **FASCICULE DE BREVET EUROPEEN**

(45) Date de publication et mention
de la délivrance du brevet:
**11.03.2009 Bulletin 2009/11**

(51) Int Cl.:
*G01J 11/00* (2006.01)  *G04F 13/02* (2006.01)
*G01N 29/34* (2006.01)

(21) Numéro de dépôt: **06831000.2**

(22) Date de dépôt: **20.10.2006**

(86) Numéro de dépôt international:
**PCT/FR2006/002384**

(87) Numéro de publication internationale:
**WO 2007/045773 (26.04.2007 Gazette 2007/17)**

(54) **DISPOSITIF D'ECHANTILLONNAGE OPTIQUE HETERODYNE**

OPTISCHE HETERODYNE-SAMPLING-EINRICHTUNG

OPTICAL HETERODYNE SAMPLING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **21.10.2005 FR 0510776**

(43) Date de publication de la demande:
**30.07.2008 Bulletin 2008/31**

(73) Titulaire: **CENTRE NATIONAL DE LA RECHERCHE SCIENTIFIQUE (CNRS)**
**75016 Paris (FR)**

(72) Inventeurs:
• **DILHAIRE, Stefan**
**F-33400 Talence (FR)**
• **CLAEYS, Wilfrid**
**F-33400 Talence (FR)**
• **RAMPNOUX, Jean-Michel**
**F-33600 Pessac (FR)**
• **ROSSIGNOL, Clément**
**F-33000 Bordeaux (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**US-A- 5 778 016**

• **ROSSIGNOL C ET AL: "Nondestructive evaluation of micrometric diamond films with an interferometric picosecond ultrasonics technique" JOURNAL OF APPLIED PHYSICS, AMERICAN INSTITUTE OF PHYSICS. NEW YORK, US, vol. 95, no. 8, 15 avril 2004 (2004-04-15), pages 4157-4162, XP012067765 ISSN: 0021-8979**
• **CÔTE R ET AL: "Refractive index, sound velocity and thickness of thin transparent films from multiple angles picosecond ultrasonics" REVIEW OF SCIENTIFIC INSTRUMENTS, AMERICAN INSTITUTE OF PHYSICS, US, vol. 76, no. 5, 29 avril 2005 (2005-04-29), pages 53906-53906, XP012079390 ISSN: 0034-6748**
• **SPENCE D E ET AL: "TIME SYNCHRONISATION MEASUREMENTS BETWEEN TWO SELF-MODELOCKED TI:SAPPHIRE LASERS" OPTICS COMMUNICATIONS, NORTH-HOLLAND PUBLISHING CO. AMSTERDAM, NL, vol. 101, no. 3 / 4, 15 août 1993 (1993-08-15), pages 286-296, XP000382903 ISSN: 0030-4018**

**Description**

Le domaine de l'invention est celui de la mesure ultra-rapide non destructive des propriétés mécaniques, thermiques ou optiques d'un matériau. On entend par mesure ultra-rapide une mesure ayant une résolution temporelle de l'ordre de la picoseconde. Les documents US5778016, Rossignol et al : Journal of Applied Physics, Vol. 95, No 8, p. 4157, (2004), et Côte et al: Review of Scientific Instruments, 76, 053906 (2005), divulguent des systèmes de mesure ultra-rapide.

Il est connu d'obtenir des mesures avec une telle résolution temporelle par des techniques d'échantillonnage optique utilisant deux trains d'impulsions respectivement désignés « pompe » et « sonde », de période de répétition T, chaque impulsion ayant une durée τ d'environ une centaine de femtosecondes.

Le faisceau « pompe » engendre une perturbation dans le matériau ou l'échantillon qui produit en réponse un signal optique fonction de ses propriétés optiques (réflectivité, absorption, expansion, contraction, ...). Le faisceau « sonde » est retardé d'une quantité Tps appelée retard « pompe-sonde » et vient lire la réponse du matériau ; il est généralement de faible intensité par rapport à celle du faisceau « pompe ». La réponse temporelle du matériau est reconstituée en faisant varier ce retard de zéro jusqu'à une durée égale au maximum à la période T du train d'impulsions. En pratique cette durée est très inférieure à T. Typiquement T est de l'ordre de 13 ns et la variation du retard est alors typiquement limitée à 2 ou 3 ns.

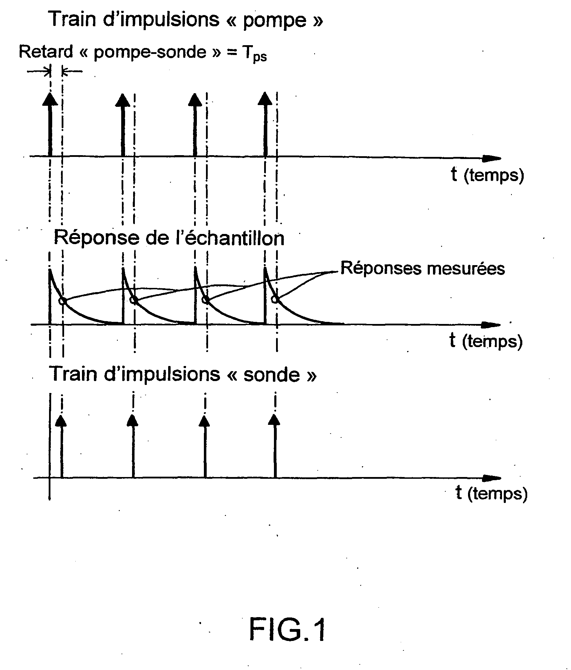

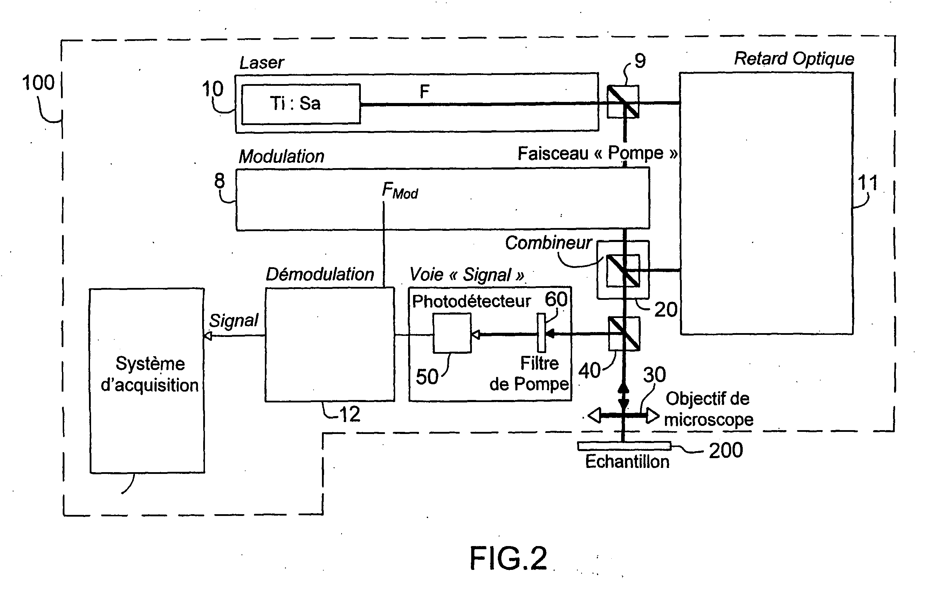

Habituellement, les deux trains d'impulsions « pompe » et « sonde » ont la même période de répétition T et l'échantillonnage est alors qualifié d'homodyne. On a illustré figure 1 dans le cas d'un échantillonnage homodyne, des trains d'impulsions « pompe » et « sonde » décalés d'un retard Tps ainsi que la valeur de la réponse de l'échantillon obtenue pour ce retard. Un exemple de montage permettant de mettre en oeuvre cette technique est schématiquement représenté figure 2. Le dispositif d'échantillonnage homodyne 100 comprend une source laser 10 reliée à un diviseur 9 apte à diviser le faisceau laser en un faisceau « pompe » modulé par un modulateur 8, et un second faisceau « sonde » qui est retardé par une ligne à retard optique 11. Le modulateur a pour fonction de transposer le signal à une fréquence plus élevée afin de le dégager du bruit qui varie en 1/f, f étant la fréquence du signal. Les deux faisceaux sont ensuite combinés par un combineur 20 avant d'être pointés sur l'échantillon 200 via un objectif de microscope 30. Dans l'exemple de la figure, la réponse de l'échantillon est obtenue par réflexion. La réponse est dirigée vers un photo détecteur 50 après filtrage par un filtre de pompe 60. Le photo détecteur est relié à un système d'acquisition 70, via un démodulateur 12 qui permet de rétablir le signal en bande de base.

Le retard Tps est réalisé et contrôlé par une ligne à retard optique comprenant un système de translation mécanique d'un miroir situé sur le trajet d'un des faisceaux. Le retard est lié à la translation par la formule :

$$Tps= d/c$$

d étant la longueur de la ligne à retard et c la vitesse de la lumière

Compte tenu des ordres de grandeur, une longueur d de 30 μm induit un retard de 100 fs. Dans la pratique, la longueur de la ligne à retard est limitée. En effet, un déplacement de plus de 30 cm affecte de façon notoire le pointé d'un faisceau par rapport à l'autre. Un retard de 10 ns qui nécessite une longueur d de 3m est donc très difficile à obtenir. A cette limite sur le déplacement correspond une limite pour les plages temporelles d'environ 2 à 3 ns : la réponse temporelle du matériau n'est reconstituée que sur environ 2 à 3 ns.

De plus ces déplacements sont réalisés au détriment de la stabilité du pointé du faisceau laser sur l'échantillon.

En outre les vibrations occasionnées par le déplacement de la ligne à retard détériorent le rapport signal sur bruit et augmentent considérablement le temps de mesure. Il est habituellement de 30 à 40 mn pour l'acquisition d'un signal sur plusieurs nanosecondes, c'est-à-dire pour effectuer les différents déplacements de manière à balayer la réponse du matériau, sur des temps qui vont jusqu'à Tp soit environ 13 ns.

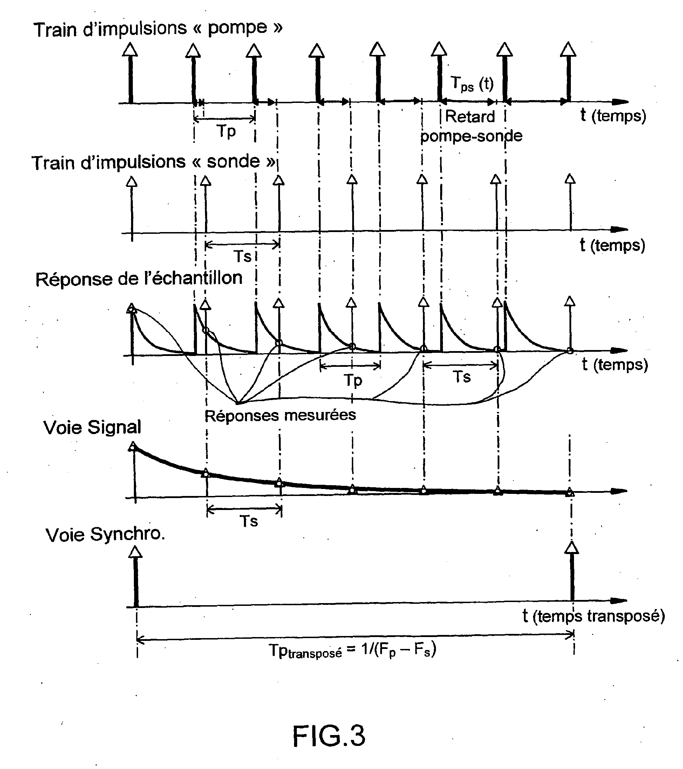

Pour pallier ces inconvénients, une solution consiste à utiliser un faisceau « pompe » de période de répétition Tp et un faisceau « sonde » de période Ts, Tp étant différente de Ts. Cet échantillonnage est alors qualifié d'hétérodyne. On à illustré figure 3 dans le cas d'un échantillonnage hétérodyne, des trains d'impulsions « pompe » et « sonde » décalés d'un retard Tps ainsi que la valeur de la réponse de l'échantillon obtenue pour ce retard. Le retard Tps entre les trains d'impulsions « pompe » et « sonde » n'est plus fixe comme dans le cas de l'échantillonnage homodyne, mais évolue avec le temps. Lorsque Tp-Ts est fixe, le retard Tps varie linéairement entre 0 et Tp. La période Tp est balayée en un temps égal à 1/ΔF avec ΔF= |Fs-Fp|, ΔF étant appelée fréquence de battement, Fp égale à 1/Tp étant la fréquence de répétition du faisceau « pompe » et Fs égale à 1/Ts celle du faisceau « sonde ».

Cette technique permet de mesurer la réponse de l'échantillon sans translation mécanique, et donc sans altération du pointé du faisceau sur l'échantillon.

En fait, le retard Tp-Ts ne varie pas linéairement car les fréquences Fp et Fs varient aléatoirement en raison de la gigue naturelle des lasers. Cette gigue a pour effet de moduler aléatoirement la fréquence du battement ΔF d'une quantité g(t). Ce phénomène est d'autant plus important que l'on souhaite obtenir une résolution temporelle réduite. En effet, pour une période Tp de 13 ns, il faut 13 000 mesures pour atteindre une résolution temporelle d'1 ps : or l'incertitude que la gigue introduit pour chaque mesure se cumule dans le temps. La gigue a ainsi pour effet de limiter la résolution temporelle.

Le but de l'invention est de permettre d'obtenir des mesures avec une résolution temporelle d'environ 1 ps voire moins (100 fs) sans avoir à effectuer de translation mécanique, et sans être pénalisé ni par un temps d'acquisition très long ni par la gigue.

Plus précisément l'invention a pour objet un dispositif d'échantillonnage optique hétérodyne équipé de deux sources laser impulsionnelles aptes à émettre respectivement un faisceau « pompe » et un faisceau « sonde » de fréquences de répétition respectives Fs et Fp avec Fs≠Fp, d'un élément de combinaison des faisceaux « pompe » et « sonde » destinés à être envoyés sur un échantillon et qui comprend une voie signal comportant un système de photo-détection du signal de réponse de l'échantillon et relié à cette voie signal, un système d'acquisition du signal de réponse. Il est principalement caractérisé en ce que Fs et Fp étant sensiblement constantes, le système d'acquisition comprenant un élément de déclenchement de l'acquisition, il comprend, reliée à cet élément de déclenchement, une voie synchronisation comportant un dispositif de mesure de la fréquence de battement |Fs-Fp| apte à générer un signal de synchronisation comportant des impulsions à chaque fois que les impulsions des faisceaux « pompe » et « sonde » coïncident.

Cette voie synchronisation permet que le système d'acquisition repère l'instant initial de la réponse, c'est-à-dire l'instant où les impulsions « pompe » coïncident avec les impulsions « sonde » sur l'échantillon. Cela permet de minimiser l'effet de la gigue naturelle des lasers sur la résolution temporelle.

Selon une caractéristique de l'invention, le dispositif de mesure comporte une photodiode à 2 photons.

Selon une autre caractéristique de l'invention, il comprend un dispositif d'asservissement d'une source laser sur l'autre qui comprend par exemple un diviseur de fréquence situé en sortie d'une source laser et un synthétiseur de fréquence relié au diviseur et à l'autre source laser.

Le système de photo-détection peut être un photo-détecteur ou une barrette de photo-détecteurs ou une matrice de photo-détecteurs.

Les sources laser présentent éventuellement la même longueur d'onde.

De préférence, les fréquences de répétition Fs et Fp sont comprises entre 1 kHz et 10 GHz, plus précisément entre 1 kHz et 100 MHz.

Selon une caractéristique de l'invention, la voie synchronisation comportant le dispositif de mesure de |Fs-Fp| est située sur le trajet du signal de réponse de l'échantillon.

Dans ce cas, le dispositif selon l'invention comprend un séparateur du signal de réponse de l'échantillon, en deux trajets, la voie signal étant située sur un trajet et la voie synchronisation sur l'autre trajet.

Selon une autre caractéristique de l'invention, la voie synchronisation est située sur le trajet des faisceaux « pompe » et « sonde » destinés à être envoyés sur l'échantillon.

De préférence, il comprend situé en entrée du système de photo détection, un filtre du faisceau « pompe » provenant de l'échantillon, ainsi qu'un filtre passe-bas disposé en sortie du système de photo-détection du signal de réponse.

Avantageusement, la fréquence de battement |Fs-Fp| est comprise entre 1 Hz et 100 kHz.

Selon une caractéristique de l'invention, les sources laser sont aptes à émettre des impulsions d'une durée comprise entre 10 fs et 10 picosecondes.

Avantageusement, il présente une résolution temporelle sensiblement égale à une picoseconde.

Selon un mode de réalisation de l'invention, le dispositif comprend un dispositif de balayage du faisceau « pompe » et/ou du faisceau « sonde » sur l'échantillon.

Selon une caractéristique de l'invention, le dispositif de balayage comprend deux lentilles et un élément de déplacement du ou des faisceaux qui peut être une platine de translation d'une lentille ou qui peut comporter deux miroirs galvanométriques aptes à pivoter respectivement autour de deux axes perpendiculaires.

Selon une autre caractéristique de l'invention, le dispositif de balayage est apte à déplacer le faisceau « pompe » et le faisceau « sonde » et le combineur comprend ce dispositif de balayage.

Selon une autre caractéristique de l'invention, le dispositif de balayage est apte à déplacer le faisceau « pompe » ou le faisceau « sonde » et est disposé en aval du combineur.

Le dispositif de balayage peut comprendre une platine de translation de l'échantillon.

L'invention concerne aussi un procédé d'échantillonnage optique hétérodyne au moyen d'un dispositif équipé de deux sources laser aptes à émettre respectivement un faisceau d'impulsions « pompe » et un faisceau d'impulsions « sonde » de fréquences de répétition respectives Fs et Fp avec Fs≠Fp, comportant une étape de combinaison des faisceaux « pompe » et « sonde », une étape d'envoi des faisceaux « pompe » et « sonde » combinés sur un échantillon, une étape de photo détection de la réponse de l'échantillon, une étape d'acquisition du signal photo détecté, caractérisé en ce que Fs et Fp étant sensiblement constantes, il comprend en outre une étape de mesure de la fréquence de battement |Fs-Fp| en vue de repérer un instant de coïncidence entre les impulsions « pompe » et « sonde » et en ce que l'étape d'acquisition est déclenchée en fonction de l'instant de coïncidence.

Selon une caractéristique de l'invention, il comprend une étape d'asservissement d'une source laser sur l'autre.

De préférence, la fréquence de battement |Fs-Fp| est sensiblement égale à $\tau F_s F_p$, $\tau$ étant la durée des impulsions du faisceau « sonde ».

Selon une caractéristique de l'invention, la réponse de l'échantillon est obtenue par réflexion ou transmission des faisceaux « pompe » et « sonde ».

Selon une autre caractéristique de l'invention, il comprend une étape de balayage du faisceau « pompe » et/ou « sonde » sur l'échantillon.

Les faisceaux « pompe » et « sonde » peuvent être superposés.

L'échantillon peut être un matériau en couches minces ou un circuit intégré ou un semi-conducteur ou une cellule biologique ou un réactif chimique.

Avantageusement, l'échantillonnage présente une résolution temporelle de l'ordre de la picoseconde.

Selon une caractéristique de l'invention, les sources laser sont aptes à émettre des impulsions d'une durée d'environ 100 femtosecondes.

De préférence, la fréquence de battement |Fs-Fp| est comprise entre 1Hz et 100 kHz.

Les fréquences de répétition Fs et Fp sont par exemple comprises entre 1 kHz et 100 MHz.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement en fonction du temps, dans le cas d'un échantillonnage homodyne, des trains d'impulsions « pompe » et « sonde » et la réponse d'un échantillon,

la figure 2 déjà décrite représente schématiquement un dispositif d'échantillonnage homodyne selon l'état de la technique,

la figure 3 représente schématiquement en fonction du temps, dans le cas d'un échantillonnage hétérodyne, des trains d'impulsions « pompe » et « sonde » et la réponse d'un échantillon,

la figure 4 déjà décrite représente schématiquement un exemple de dispositif d'échantillonnage hétérodyne selon l'invention,

la figure 5 représente schématiquement un exemple de représentation de la réponse impulsionnelle d'un film de tungstène en fonction du temps, obtenue avec un dispositif selon l'invention,

les figures 6a, 7a, 8a, 9a, 10a représentent schématiquement des exemples de dispositifs d'échantillonnage hétérodyne selon l'invention équipés d'un dispositif de balayage, et les figures 6b, 7b, 8b, 9b, 10b représentent schématiquement les trajets des faisceaux « pompe » et « sonde » à travers le dispositif de balayage correspondant et l'objectif jusqu'à l'échantillon.

D'une figure à l'autre, les mêmes éléments sont repérés par les mêmes références.

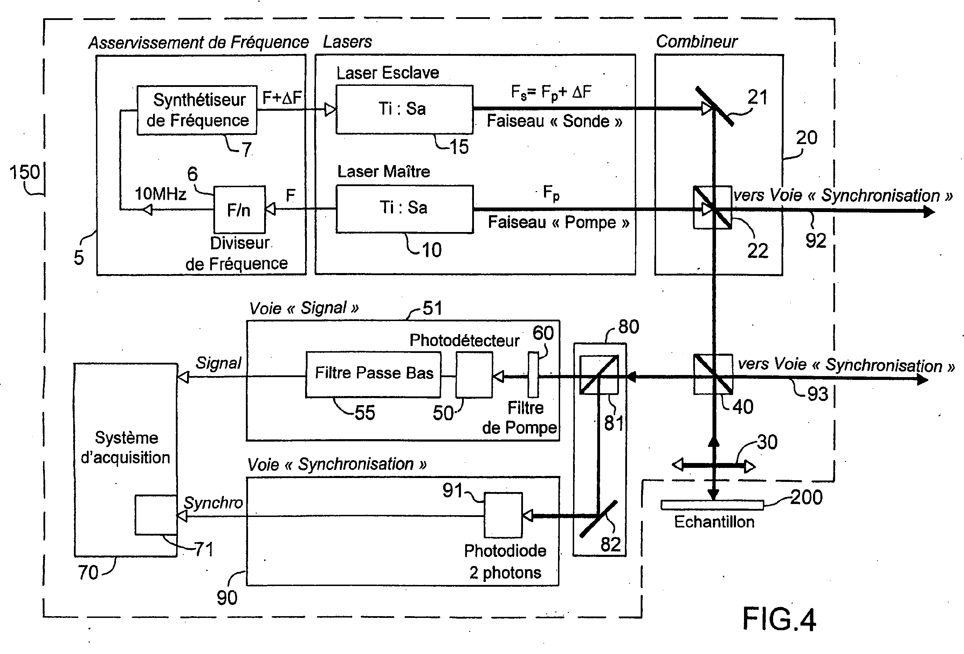

L'invention est basée sur le principe de l'échantillonnage hétérodyne qui permet d'éviter d'effectuer une translation mécanique et qui permet de réduire considérablement le temps d'acquisition. Le dispositif 150 selon l'invention décrit en relation avec la figure 4, comprend donc de manière classique, une source laser impulsionnelle « pompe » 10 et une source laser impulsionnelle « sonde » 15, aptes à émettre respectivement un faisceau « pompe » et un faisceau « sonde ». La durée des impulsions du faisceau « pompe » n'est généralement pas égale à celle des impulsions du faisceau « sonde », mais elles peuvent être égales. Dans la suite, la durée des impulsions $\tau$ considérée est celle des impulsions du faisceau « sonde ». Les faisceaux « pompe » et « sonde » n'ont généralement pas la même longueur d'onde mais elles peuvent être égales.

Les faisceaux sont combinés par un combineur 20 qui comprend par exemple un miroir 21 et une lame semi-transparente 22, avant d'être envoyés sur l'échantillon 200 à mesurer, à travers un élément de focalisation 30 tel qu'une lentille. La réponse de l'échantillon obtenue par réflexion comme représenté sur la figure, ou par transmission est reçue par un photo-détecteur 50 puis transmise à un système d'acquisition 70. De préférence, un filtre de « pompe » 60 est situé avant le photo détecteur 50 pour filtrer le signal résiduel de « pompe ». Un filtre passe-bas 55 est avantageusement disposé entre le photo détecteur 50 et le système d'acquisition 70 pour éliminer les impulsions du laser superposées à la réponse. On désigne par voie signal 51 l'ensemble de ces 3 éléments 60, 50 et 55.

La gigue a pour effet de limiter la résolution temporelle $T_p$-$T_s$. En effet, on a :

$$T_p\text{-}T_s = \Delta F/F_p F_s$$

Comme la résolution temporelle est égale à $\Delta F/F_p F_s$ (ou $\Delta F/F^2_s$ lorsque $\Delta F$ est petit par rapport à la fréquence du laser), la modulation de ΔF limite la résolution temporelle.

Une solution pour minimiser l'effet de la gigue naturelle des lasers sur la résolution temporelle consiste à repérer l'instant initial de la réponse, c'est-à-dire l'instant où les impulsions « pompe » coïncident avec les impulsions « sonde » sur l'échantillon, comme illustré figure 3 par la courbe « voie synchronisation ». Il s'agit de reconstituer l'échelle des temps de la réponse de l'échantillon dans le temps transposé.

Le dispositif 150 selon l'invention comprend alors en plus de la voie signal, une voie de synchronisation 90 qui comprend un dispositif 91 de mesure de |Fs-Fp| apte à générer un signal de synchronisation constitué d'impulsions à chaque fois que les impulsions laser « pompe » et « sonde » sont en coïncidence sur l'échantillon. Ce signal de synchronisation est proportionnel à la multiplication du signal ou train d'impulsions « pompe » par le signal ou train d'impulsions « sonde ». Le dispositif de mesure 91 comprend par exemple une photodiode à 2 photons. Cette mesure est effectuée à partir du signal de réponse dont une partie est prélevée avant la voie signal, par un diviseur 80 qui comporte par exemple une lame semi-transparente 81 et un miroir 82.

Selon une variante, cette voie de synchronisation 90 est située avant l'échantillon 200 : la mesure est alors effectuée en prélevant une partie des faisceaux « pompe » et « sonde » avant l'échantillon. Cette variante est référencée 92 ou 93.

Le système d'acquisition 70 comprend un élément 71 de déclenchement de l'acquisition. La voie synchronisation 90 (ou 92 ou 93) est reliée en sortie à cet élément 71 qui peut ainsi déclencher l'acquisition de la réponse à l'instant de coïncidence. Cet instant est l'instant initial aussi dénommé zéro temporel.

L'effet de la gigue peut être encore plus réduit de la façon suivante. Dans un premier temps on évalue l'effet de la gigue sur le retard Tps.

On désigne:

$I_p(2\pi F_p t)$ le train d'impulsions « pompe » et
$I_p(2\pi F_p (t-T_{ps}(t))) = Ip(2\pi F_s t)$ le train d'impulsions « sonde ».

La fréquence instantanée du train d'impulsion « sonde » s'écrit :

$$F_s(t) = \frac{dF_p(t - T_{ps}(t))}{dt} = F_p\left(1 - \frac{dT_{ps}(t)}{dt}\right)$$

Une variation linéaire du retard est obtenue si la fréquence du train d'impulsion « sonde » est décalée d'une quantité fixe :

$$\left|F_s - F_p\right| = \Delta F = F_p \frac{dT_{ps}(t)}{dt}$$

Ainsi les retards varient de zéro à Tp (de manière discrète selon la résolution temporelle). La période du train d'impulsions est balayée en un temps égal à l'inverse du battement de fréquence ΔF. La réponse de l'échantillon est observée dans une échelle de temps transposée dans laquelle $\Delta T_{ps}/\Delta t = \Delta F / F_p$. Cette dilatation de l'échelle des temps permet de transposer le spectre du signal de réponse dans la bande passante du détecteur.

En fait la variation de $T_{ps}$ contient un terme de bruit : la gigue g(t) qui est la variation aléatoire de fréquence. Elle a pour effet de moduler aléatoirement la fréquence de battement d'une quantité g(t).

On a:

$$\frac{dT_{ps}(t)}{dt} = \frac{\Delta F + g(t)}{F_p}$$

$$T_{ps}(t) + \Delta T_{ps} = \int_0^t \frac{\Delta F}{F_p} du + \frac{1}{F_p} \int_0^t g(u) du = \frac{\Delta F}{F_p} t + \frac{1}{F_p} \int_0^t g(u) du$$

L'incertitude $\Delta T_{ps}$ est amplifiée au cours du temps :

$$\left| \Delta T_{ps} \right| = \frac{1}{F_p} \left| \int_0^t g(u) du \right| = \frac{1}{F_p} \langle g \rangle . t$$

Sur une période de mesure cette incertitude est :

$$\left| \Delta T_{ps} \right| = \frac{1}{F_p} \left| \langle g \rangle \right| . T_{transposé} = \frac{1}{F_p} \left| \langle g \rangle \right| . \frac{1}{\Delta F} = T_p \left| \langle g \rangle \right| . \frac{1}{\Delta F}$$

Pour minimiser cette incertitude, il faut que la gigue soit négligeable devant le battement: on choisit un battement $\Delta F$ important. Cependant celui-ci est limité : la limite haute pour $\Delta F$ notée $\Delta F_{max}$, est imposée par la résolution temporelle que l'on souhaite atteindre.

La résolution est intrinsèquement limitée par la durée $\tau$ des impulsions : $\tau \geq | T_s - T_p |$

On a donc :

$$\tau \geq | \Delta F| / (F_s . F_p)$$

D'où:

$$\Delta F_{max} = \tau \ F_p \ F_s$$

Pour des lasers Sa :Ti de fréquences de répétition Fp et $F_s$ de 76 MHz délivrant des impulsions de 100 fs ($\tau$ = 100 fs), on obtient un battement $\Delta F_{max}$ de 600 Hz pour une résolution temporelle maximale égale à 100 fs. La gigue doit alors être très inférieure à quelques Hz pour que la résolution soit obtenue.

Pour minimiser l'effet de la gigue, on peut aussi asservir la fréquence de l'un des deux trains d'impulsions sur celle de l'autre en utilisant un dispositif d'asservissement 5 représenté figure 4. Ce dispositif est par exemple un dispositif de contrôle de longueur d'une des deux cavités laser.

On utilise l'entrée de synchronisation d'un synthétiseur de fréquence 7 en lui injectant un signal de référence F/n obtenu par un diviseur de fréquence 6 du train d'impulsion de l'une des deux sources laser 10 qui joue le maître. On décale ensuite de la quantité $\Delta F$ la sortie du synthétiseur de fréquence 7 et le signal F+$\Delta F$ est utilisé comme commande du système de contrôle de la source laser esclave 15.

La source laser maître est la source laser « pompe » et la source laser esclave est la source laser « sonde » comme représenté sur la figure. On peut aussi avoir l'inverse, la source laser « sonde » comme source laser maître et la source laser « pompe » comme source laser esclave.

Quand les deux sources laser « pompe » et « sonde » sont asservies en fréquence, le battement peut être aussi faible que les performances du dispositif le permettent (typiquement quelques fractions de Hertz).

Lorsque l'effet de la gigue a été minimisé, on peut atteindre la résolution maximale limitée par la durée des impulsions $\tau$ si $\Delta F \leq \tau F_s F_p$.

On considère à présent la bande passante du filtre passe-bas que l'on définit de la manière suivante : le temps de réponse du filtre passe-bas est égal à l'inverse de sa bande passante.

$$\tau_R \approx 1/B_d.$$

La résolution temporelle souhaitée $\tau_{eff}$ devient dans le temps transposé la résolution temporelle du filtre passe-bas $\tau_R$.

On a $\tau_{eff} = \tau_R \, \Delta F / F_p$,

On en déduit $\tau_{eff} \approx \Delta F / B_d F_p$

Avec $\Delta F$ = 600 Hz et Fp = 76 MHz, on obtient une bande passante de 8 MHz pour une résolution temporelle effective de 1 ps.

On résume dans le tableau suivant les caractéristiques et performances des essais effectués.

|  | Notation | Valeurs | Unités |
|---|---|---|---|
| Fréquence de pompe | Fp | 76 | MHz |
| Fréquence de sonde | $Fs=Fp+\Delta F$ | 76.0006 | MHz |
| Battement | $\Delta F$ | 600 | Hz |
| Fenêtre temporelle | $1 / F_p$ | 13 | ns |
| Fenêtre temporelle transposée | $T_{tr}= 1/\Delta F$ | 1.66 | ms |
| Nombre de mesures par période | $N= F_s/ \Delta F$ | 126 666 | points |
| Résolution maximale | $\Delta F /F_s F_p$ | 100 | fs |
| Durée des impulsions | $\tau$ | 100 | fs |
| Bande passante du filtre passe-bas | $B_d=1/ \tau_R$ | 8 | MHz |
| Résolution temporelle effective | $\tau_{eff}=\Delta F /B_d F_p$ | 1 | ps |

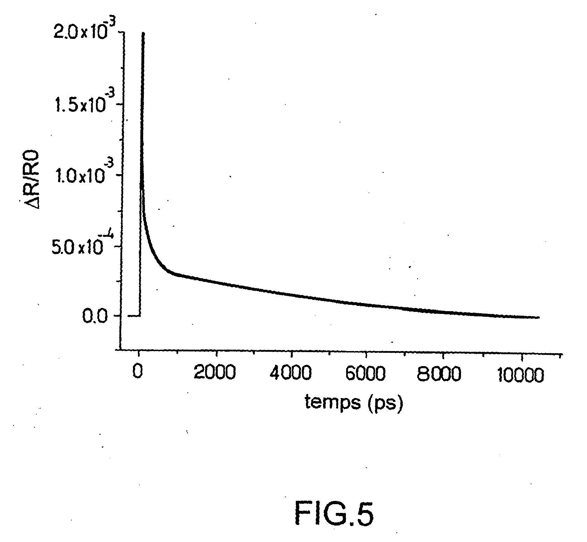

On a représenté figure 5 une courbe de la réponse impulsionnelle de la réflectivité R obtenue sur un film de tungstène de 280 mm d'épaisseur sur une durée $T_p$ de 13 ns avec un dispositif d'échantillonnage hétérodyne selon l'invention. Plus précisément la mesure est celle de la réponse impulsionnelle de $\Delta R/R0$, R0 étant la réflectivité moyenne du film de tungstène et $\Delta R$ sa variation. La résolution temporelle est d'une picoseconde, la plage temporelle est étendue jusqu'à la période du train d'impulsions Tp, de l'ordre de 13 ns et le temps d'acquisition de 30 secondes est ainsi divisé par un facteur 10 à 50 comparé à celui obtenu par un dispositif d'échantillonnage homodyne pour une plage temporelle d'environ 1 ns, c'est-à-dire 10 fois plus petite.

Le procédé d'échantillonnage selon l'invention s'applique notamment à la mesure de propriétés optiques, thermiques et mécaniques de matériaux en couches minces, de quelques nm à quelques $\mu$m, à l'analyse de défaillance en microélectronique, à l'acoustique picoseconde, à l'étude du transfert de chaleur aux petites échelles d'espace (nm-$\mu$m) et de temps (fs à $\mu$s), à l'étude de nano objets et nano matériaux, à l'étude de réactions chimiques, au suivi de traceurs biologiques.

Le dispositif d'échantillonnage selon l'invention peut être associé à un dispositif de balayage du faisceau « pompe » et/ou « sonde » sur l'échantillon 200. Pour chaque position du (ou des) faisceau(x) sur l'échantillon, le signal de réponse temporel est enregistré comme décrit précédemment. La résolution temporelle maximale est la durée des impulsions laser. Ce dispositif d'échantillonnage peut ainsi être appliqué à de l'imagerie ultra rapide.

A partir du balayage de la surface d'un échantillon, on peut reconstituer un film de la réponse de la surface balayée avec une résolution de l'ordre de $10^{12}$ images par seconde pendant la plage temporelle comprise entre deux impulsions du laser de pompe, c'est-à-dire 12 ns. Un tel balayage a été réalisé avec comme échantillon, un film de tungstène de 250 nm d'épaisseur ayant une surface de 15 x 15 $\mu$m$^2$.

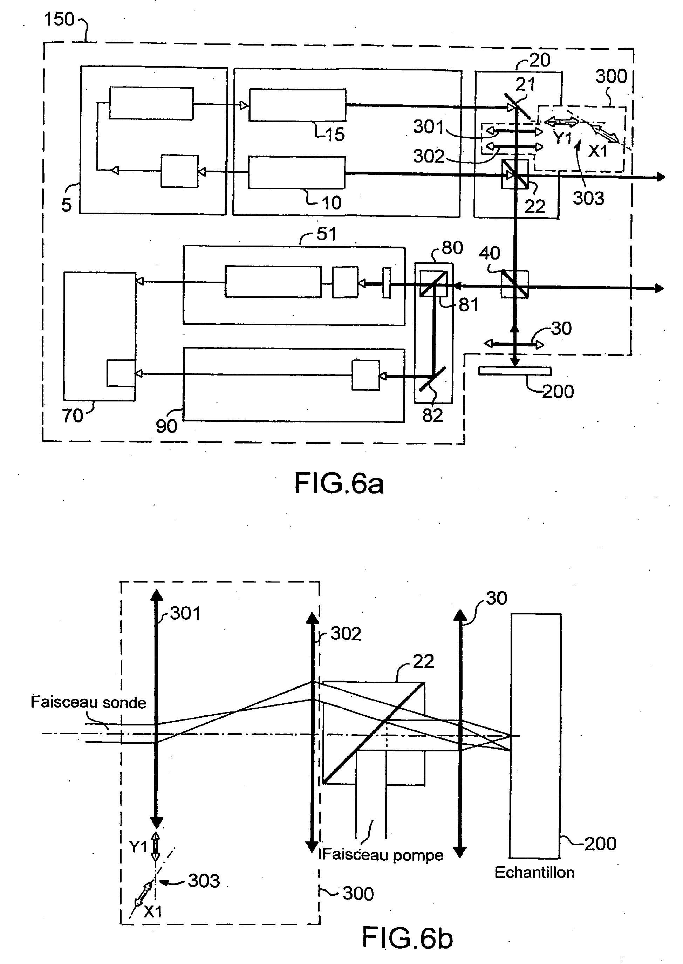

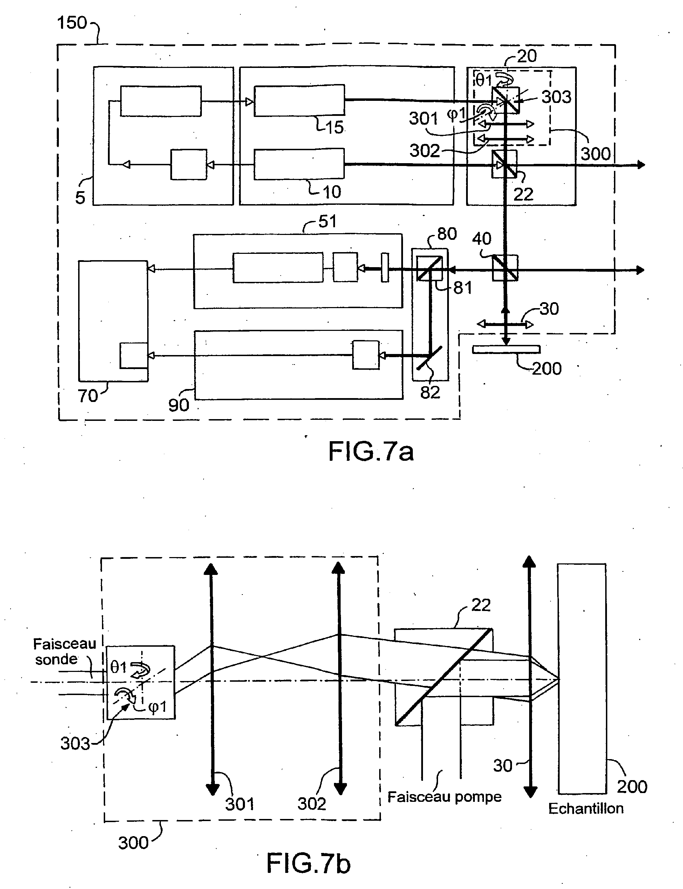

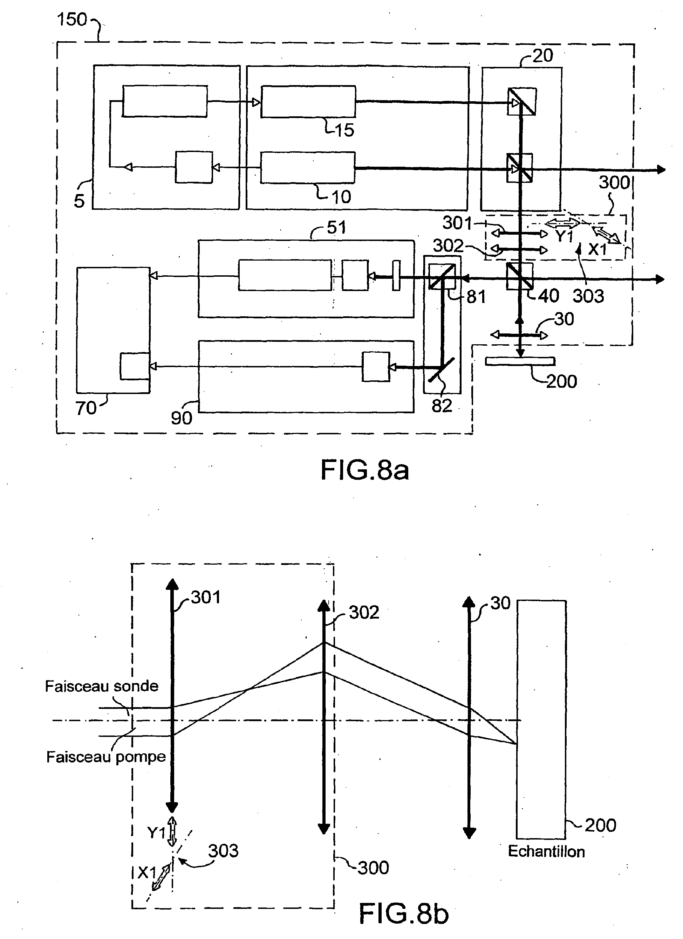

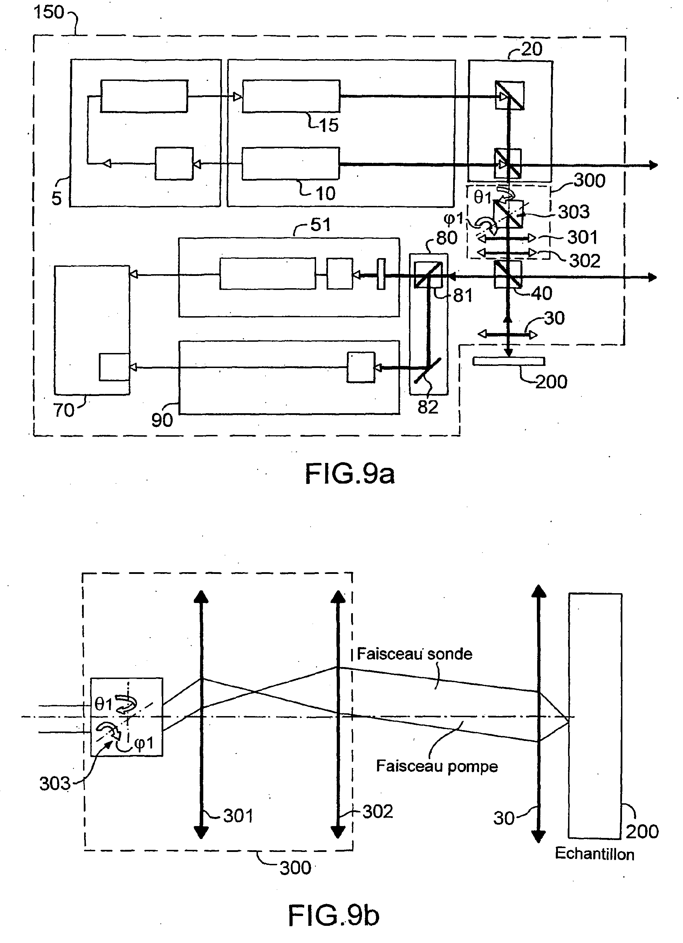

Le dispositif de balayage 300 comprend deux lentilles 301 et 302 de focales f1 et f2 situées à une distance f1+f2 l'une de l'autre et un élément 303 de déplacement du ou des faisceaux, tel que représenté sur les figures 6 à 9. Cet élément de déplacement 303 est une platine de translation d'une lentille dans un plan X,Y parallèle à celui de l'échantillon comme illustré figures 6 et 8 ou comporte deux miroirs galvanométriques aptes à pivoter respectivement autour de deux axes perpendiculaires $\varphi$1, $\theta$1 comme illustré figures 7 et 9. On a représenté sur les figures b, les trajets des faisceaux « pompe » et « sonde » à travers le dispositif de balayage 300 correspondant et l'objectif 30 jusqu'à l'échantillon 200.

Selon un premier mode de réalisation décrit en relation avec les figures 6a et 7a, le dispositif de balayage 300 est inclus dans le combineur 20, par exemple en amont de la lame semi-transparente 22 : les faisceaux sont combinés par le combineur 20 mais ne sont pas superposés. Le faisceau « sonde » balaie l'échantillon 200 alors que le faisceau « pompe » reste sur l'échantillon à une position fixe.

Selon un deuxième mode de réalisation décrit en relation avec les figures 8a et 9a, le dispositif de balayage 300 est en aval du combineur 20 : les faisceaux « pompe » et « sonde » sont combinés et superposés par le combineur 20. Ils sont superposés sur l'échantillon 200.

Dans les modes de réalisation précédents, le faisceau « pompe » et/ou « sonde » se déplacent, l'échantillon 200 étant fixe.

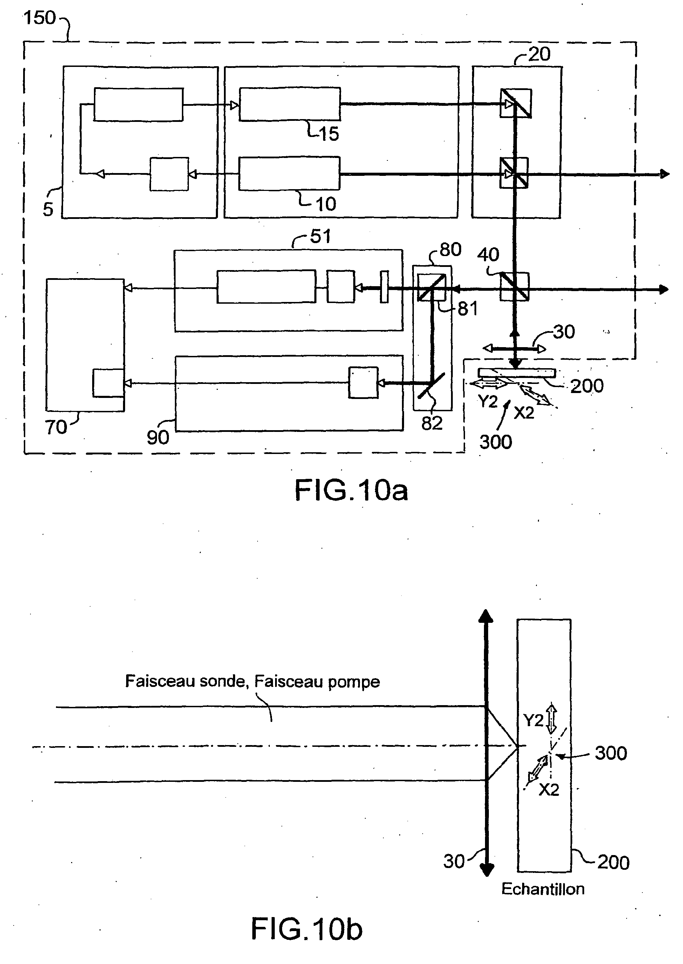

Selon un autre mode dé réalisation décrit en relation avec les figures 10a et 10b, les faisceaux « pompe » et « sonde » sont fixes et le dispositif de balayage 300 est alors une platine de translation dans le plan de l'échantillon, sur laquelle est monté l'échantillon 200.

Les faisceaux « pompe » et « sonde » représentés sur les figures 6 à 10 peuvent être inversés.

## Revendications

1. Dispositif (150) d'échantillonnage optique hétérodyne équipé de deux sources laser impulsionnelles (10, 15) susceptibles de présenter de la gigue, aptes à émettre respectivement un faisceau « pompe » et un faisceau « sonde » de fréquences de répétition respectives Fs et Fp avec Fs≠Fp, d'un élément de combinaison (20) des faisceaux « pompe » et « sonde » destinés à être envoyés sur un échantillon (200) et qui comprend une voie signal (51) comportant un système de photo-détection (50) du signal de réponse de l'échantillon, et un système d'acquisition (70) du signal photo détecté, relié à la voie signal, **caractérisé en ce que** Fs et Fp étant sensiblement constantes, le système d'acquisition comportant un élément (71) de déclenchement de l'acquisition, il comprend reliée à cet élément de déclenchement, une voie synchronisation (90) comportant un dispositif (91) de mesure de la fréquence de battement |Fs-Fp| apte à générer un signal de synchronisation comportant des impulsions à chaque fois que les impulsions des faisceaux « pompe » et « sonde » coïncident.

2. Dispositif selon la revendication précédente, **caractérisé en ce que** le dispositif de mesure (91) comporte une photodiode à 2 photons.

3. Dispositif selon l'une quelconque des revendications précédentes, **caractérisé en ce qu'**il comprend un dispositif d'asservissement (5) d'une source laser sur l'autre.

4. Dispositif selon la revendication précédente, **caractérisé en ce que** le dispositif d'asservissement (5) comprend un diviseur de fréquence (6) situé en sortie d'une source laser et un synthétiseur de fréquence (7) relié au diviseur (6) et à l'autre source laser.

5. Dispositif selon l'une quelconque des revendications précédentes, **caractérisé en ce que** le système de photo-détection (50) est un photo-détecteur ou une barrette de photo-détecteurs ou une matrice de photo-détecteurs.

6. Dispositif selon l'une quelconque des revendications précédentes, **caractérisé en ce que** les sources laser (10, 15) ont des longueurs d'onde différentes.

7. Dispositif selon l'une quelconque des revendications précédentes, **caractérisé en ce que** les fréquences de répétition Fs et Fp sont comprises entre 1kHz et 10 GHz.

8. Dispositif selon l'une quelconque des revendications 1 à 6, **caractérisé en ce que** les fréquences de répétition Fs et Fp sont comprises entre 1 kHz et 100 MHz.

9. Dispositif selon l'une quelconque des revendications précédentes, **caractérisé en ce que** la voie synchronisation (90) comportant le dispositif de mesure (91) de |Fs-Fp| est située sur le trajet du signal de réponse de l'échantillon.

10. Dispositif selon la revendication précédente, **caractérisé en ce qu'**il comprend un séparateur (80) du signal de réponse de l'échantillon, en deux trajets, la voie signal (51) étant située sur un trajet et la voie synchronisation (90) sur l'autre trajet.

11. Dispositif selon l'une quelconque des revendications 1 à 8, **caractérisé en ce que** la voie synchronisation (90) est située sur le trajet des faisceaux « pompe » et « sonde » destinés à être envoyés sur l'échantillon.

**12.** Dispositif selon l'une quelconque des revendications précédentes, **caractérisé en ce qu'**il comprend situé en entrée du système de photo détection (50), un filtre (60) du faisceau « pompe » provenant de l'échantillon.

**13.** Dispositif selon l'une quelconque des revendications précédentes, **caractérisé en ce qu'**il comprend un filtre passe-bas (55) disposé en sortie du système de photo-détection (50) du signal de réponse.

**14.** Dispositif selon l'une quelconque des revendications précédentes, **caractérisé en ce que** la fréquence de battement |Fs-Fp| est comprise entre 1 Hz et 100 kHz.

**15.** Dispositif selon l'une quelconque des revendications précédentes, **caractérisé en ce que** les sources laser (10, 15) sont aptes à émettre des impulsions d'une durée comprise entre environ 10 fs et 10 picosecondes.

**16.** Dispositif selon l'une quelconque des revendications précédentes, **caractérisé en ce qu'**il présente une résolution temporelle sensiblement égale à une picoseconde.

**17.** Dispositif selon l'une quelconque des revendications précédentes, **caractérisé en ce qu'**il comprend un dispositif de balayage (300) du faisceau « pompe » et/ou du faisceau « sonde » sur l'échantillon (200).

**18.** Dispositif selon la revendication précédente, **caractérisé en ce que** le dispositif de balayage comprend deux lentilles (301, 302) et un élément de déplacement (303) du ou des faisceaux.

**19.** Dispositif selon la revendication précédente, **caractérisé en ce que** l'élément de déplacement (303) est une platine de translation d'une lentille (301 ou 302) ou comporte deux miroirs galvanométriques aptes à pivoter respectivement autour de deux axes perpendiculaires.

**20.** Dispositif selon l'une quelconque des revendications 17 à 19, **caractérisé en ce que** le dispositif de balayage (300) est apte à déplacer le faisceau « pompe » et le faisceau « sonde » et **en ce que** le combineur (20) comprend ce dispositif de balayage.

**21.** Dispositif selon l'une quelconque des revendications 17 à 19, **caractérisé en ce que** le dispositif de balayage (300) est apte à déplacer lé faisceau « pompe » ou le faisceau « sonde » et est disposé en aval du combineur (20).

**22.** Dispositif selon la revendication 17, **caractérisé en ce que** le dispositif de balayage (300) comprend une platine de translation de l'échantillon (200).

**23.** Procédé d'échantillonnage optique hétérodyne au moyen d'un dispositif équipé de deux sources laser (10, 15) susceptibles de présenter de la gigue, aptes à émettre respectivement un faisceau d'impulsions « pompe » et un faisceau d'impulsions « sonde » de fréquences de répétition respectives Fs et Fp avec Fs≠Fp, comportant une étape de combinaison des faisceaux « pompe » et « sonde », une étape d'envoi des faisceaux « pompe » et « sonde » combinés sur un échantillon (200), une étape de photo détection de la réponse de l'échantillon, et une étape d'acquisition du signal photo détecté, **caractérisé en ce que** Fs et Fp étant sensiblement constantes, il comprend en outre une étape de mesure de la fréquence de battement |Fs-Fp| en vue de repérer un instant de coïncidence entre les impulsions « pompe » et « sonde » et **en ce que** l'étape d'acquisition est déclenchée en fonction de l'instant de coïncidence.

**24.** Procédé selon la revendication précédente, **caractérisé en ce qu'**il comprend une étape d'asservissement d'une source laser sur l'autre.

**25.** Procédé selon l'une quelconque des revendications 23 à 24, **caractérisé en ce que** la fréquence de battement |Fs-Fp| est sensiblement égale à $\tau\, F_s\, F_p$, $\tau$ étant la durée des impulsions du faisceau « sonde ».

**26.** Procédé selon l'une quelconque des revendications 23 à 25, **caractérisé en ce que** la réponse de l'échantillon est obtenue par réflexion ou transmission des faisceaux « pompe » et « sonde ».

**27.** Procédé selon l'une quelconque des revendications 23 à 26, **caractérisé en ce qu'**il comprend une étape de balayage du faisceau « pompe » et/ou « sonde » sur l'échantillon (200).

**28.** Procédé selon l'une quelconque des revendications 23 à 27, **caractérisé en ce que** les faisceaux « pompe » et « sonde » sont superposés.

29. Procédé selon l'une quelconque des revendications 23 à 28, **caractérisé en ce que** l'échantillon est un matériau en couches minces ou un circuit intégré ou un semi-conducteur ou une cellule biologique ou un réactif chimique.

30. Procédé selon l'une quelconque des revendications 23 à 29, **caractérisé en ce que** l'échantillonnage présente une résolution temporelle de l'ordre de la picoseconde.

31. Procédé selon l'une quelconque des revendications 23 à 30, **caractérisé en ce que** les sources laser sont aptes à émettre des impulsions d'une durée d'environ 100 femtosecondes.

32. Procédé selon l'une quelconque des revendications 23 à 31, **caractérisé en ce que** la fréquence de battement |Fs-Fp| est comprise entre 10 Hz et 100 kHz.

33. Procédé selon l'une quelconque des revendications 23 à 32, **caractérisé en ce que** les fréquences de répétition Fs et Fp sont comprises entre 0.1 MHz et 100 MHz.

**Claims**

1. An optical heterodyne sampling device (150) equipped with two pulsed laser sources (10, 15) which may have jitter and which can emit respectively a "pump" beam and a "probe" beam having respective repetition frequencies Fs and Fp, whereby Fs≠Fp, an element (2) for combining "pump" and "probe" beams which are intended to be passed over a sample (200) and consisting of a signal channel (51) comprising a system (50) for the photodetection of the response signal from the sample and a system (70) for acquiring the photodetected signal which is connected to the signal channel, **characterised in that** with Fs and Fp being essentially constant and the acquisition system comprising an acquisition trigger element (71), it includes connected to this trigger element a synchronisation channel (90) comprising a device (91) for measuring the beat frequency |Fs-Fp| which can generate a synchronisation signal comprising pulses each time the pulses of the "pump" beam and the "probe" beam coincide.

2. The device according to the preceding claim, **characterised in that** the measuring device (91) comprises a photodiode with 2 photons.

3. The device according to any of the preceding claims, **characterised in that** it comprises a servo device (5) for one laser source over the other.

4. The device according to the preceding claim, **characterised in that** the servo device (5) comprises a frequency divider (6) located at the output of a laser source and a frequency synthesiser (7) connected to the divider (6) and the other laser source.

5. The device according to any of the preceding claims, **characterised in that** the photodetection system (50) is a photodetector or a strip of photodetectors or a matrix of photodetectors.

6. The device according to any of the preceding claims, **characterised in that** the laser sources (10, 15) have different wavelengths.

7. The device according to any of the preceding claims, **characterised in that** the repetition frequencies Fs and Fp are between 1 kHZ and 10 GHz.

8. The device according to any of Claims 1 to 6, **characterised in that** the repetition frequencies Fs and Fp are between 1 kHz and 100 MHz.

9. The device according to any of the preceding claims, **characterised in that** the synchronisation channel (90) comprising the device (91) for measuring |Fs-Fp| is located on the path of the response signal from the sample.

10. The device according to the preceding claim, **characterised in that** it comprises a separator (80) of the response signal from the sample into two paths, the signal channel (51) being located on one path and the synchronisation channel (90) on the other path.

**11.** The device according to any of Claims 1 to 8, **characterised in that** the synchronisation channel (90) is located on the path of the "pump" and "probe" beam intended to be passed over the sample.

**12.** The device according to any of the preceding claims, **characterised in that** it comprises, located at the input of the photodetection system (50), a filter (60) of the "pump" beam deriving from the sample.

**13.** The device according to any of the preceding claims, **characterised in that** it comprises a low-pass filter (55) disposed at the output of the photodetection system (50) of the response signal.

**14.** The device according to any of the preceding claims, **characterised in that** the beat frequency |Fs-Fp| is between 1 Hz and 100 kHz.

**15.** The device according to any of the preceding claims, **characterised in that** the laser sources (10, 15) can emit pulses with a duration of between approximately 10 fs and 10 picoseconds.

**16.** The device according to any of the preceding claims, **characterised in that** it has a time resolution substantially equal to one picosecond.

**17.** The device according to any of the preceding claims, **characterised in that** it comprises a device (300) for scanning the "pump" beam and/or the "probe" beam over the sample (200).

**18.** The device according to the preceding claim, **characterised in that** the scanning device comprises two lenses (301, 302) and an element (303) for moving the beam or beams.

**19.** The device according to the preceding claim, **characterised in that** the movement element (303) is a lens translation plate (301 or 302) or comprises two galvanometric mirrors which can pivot respectively about two perpendicular axes.

**20.** The device according to any of Claims 17 to 19, **characterised in that** the scanning device (300) can move the "pump" beam and the "probe" beam and **in that** the combiner (20) includes this scanning device.

**21.** The device according to any of Claims 17 to 19, **characterised in that** the scanning device (300) can move the "pump" beam or the "probe" beam and is disposed downstream of the combiner (20).

**22.** The device according to Claim 17, **characterised in that** the scanning device (300) comprises a sample translation plate (200).

**23.** A process of optical heterodyne sampling by means of a device equipped with two laser sources (10, 15) which may jitter and which can emit respectively a "pump" pulse beam and a "probe" pulse beam of respective repetition frequencies Fs and Fp, whereby Fs#Fp, comprising a step of combining "pump" and "probe" beams, a step of sending combined "pump" and "probe" beams over a sample (200), a step of photodetection of the response from the sample, and a step of acquiring the photodetected signal, **characterised in that** with Fs and Fp being essentially constant, it further comprises a step of measuring the beat frequency |Fs-Fp| in view of locating an instance of coincidence between the "pump" and "probe" pulses and **in that** the acquisition step is triggered dependently upon the instance of coincidence.

**24.** The process according to the preceding claim, **characterised in that** it comprises a step of serving one laser source over the other.

**25.** The process according to any of Claims 23 to 24, **characterised in that** the beat frequency |Fs-Fp| is substantially equal to $\tau F_s F_p$, $\tau$ being the duration of the "probe" beam pulses.

**26.** The process according to any of Claims 23 to 25, **characterised in that** the response from the sample is obtained by reflection or transmission of the "pump" and "probe" beams.

**27.** The process according to any of Claims 23 to 26, **characterised in that** it comprises a step of scanning the "pump" and/or "probe" beam over the sample (200).

**28.** The process according to any of Claims 23 to 27, **characterised in that** the "pump" and "probe" beams are superimposed.

29. The process according to any of Claims 23 to 28, **characterised in that** the sample is a material made up of thin layers or an integrated circuit or a semi-conductor or a biological cell or a chemical reagent.

30. The process according to any of Claims 23 to 29, **characterised in that** the sampling has a time resolution of around a picosecond.

31. The process according to any of Claims 23 to 30, **characterised in that** the laser sources can emit pulses with a duration of approximately 100 femtoseconds.

32. The process according to any of Claims 23 to 31, **characterised in that** the beat frequency |Fs-Fp| is between 10 Hz and 100 kHz.

33. The process according to any of Claims 23 to 32, **characterised in that** the repetition frequencies Fs and Fp are between 0.1 MHz and 100 MHz.


**Patentansprüche**

1. Heterodyne optische Abtastvorrichtung (150), ausgerüstet:

   - mit zwei Impulslaserquellen (10, 15), die ein Flackern aufweisen können, wobei die Quellen in der Lage sind, jeweils einen "Pump"- Strahl und einen "Sonden" - Strahl mit entsprechenden Wiederholungsfrequenzen Fs und Fp mit Fs ≠ Fp abzustrahlen,
   - mit einem Element zur Kombinierung (20) des "Pump" - Strahls und des "Sonden" - Strahls, die dazu bestimmt sind, auf eine Probe (200) gesendet zu werden,
   - und die einen ein Photodetektionssystem (50) für das Proben - Antwortsignal umfassenden Signalweg (51) und
   - ein an den Signalweg angeschlossenes Akquisitionssystem (70) für das erfasste Photosignal umfasst,

   **dadurch gekennzeichnet, dass** die Vorrichtung, bei der Fs und Fp im Wesentlichen konstant sind und das Akquisitionssystem ein Element (71) zur Auslösung der Akquisition und einen an dieses Auslösungselement angeschlossenes Synchronisierungsweg (90) umfasst, der eine Vorrichtung (91) zum Messen der Mischfrequenz |Fs-Fp| umfasst, die in der Lage ist, jedes Mal ein Synchronisierungssignal zu erzeugen, wenn die Impulse des "Pump" - Strahls und des "Sonden" - Strahls zusammenfallen.

2. Vorrichtung nach dem vorstehenden Patentanspruch, **dadurch gekennzeichnet, dass** die Messvorrichtung (91) eine Zweiphotonen - Photodiode umfasst.

3. Vorrichtung nach irgendeinem der vorstehenden Patentansprüche, **dadurch gekennzeichnet, dass** sie eine Steuerungsvorrichtung (5) zum Anordnen einer Laserquelle unter eine andere umfasst.

4. Vorrichtung nach irgendeinem der vorstehenden Patentansprüche, **dadurch gekennzeichnet, dass** die Steuerungsvorrichtung (5) einen Frequenzteiler (6), der am Ausgang einer Laserquelle gelegen ist, und eine an den Frequenzteiler (6) und die andere Laserquelle angeschlossene Frequenzsynthetisierungsvorrichtung (7) umfasst.

5. Vorrichtung nach irgendeinem der vorstehenden Patentansprüche, **dadurch gekennzeichnet, dass** das Photodetektionssystem (50) ein Photodetektor oder eine Photodetektoren - Leiste oder eine Matrize aus Photodetektoren ist.

6. Vorrichtung nach irgendeinem der vorstehenden Patentansprüche, **dadurch gekennzeichnet, dass** die Laserquellen (10, 15) verschiedene Wellenlängen haben.

7. Vorrichtung nach irgendeinem der vorstehenden Patentansprüche, **dadurch gekennzeichnet, dass** die Wiederholungsfrequenzen Fs und Fp zwischen 1 kHz und 10 GHz liegen.

8. Vorrichtung nach irgendeinem der Patentansprüche 1 bis 6, **dadurch gekennzeichnet, dass** die Wiederholungsfrequenzen Fs und Fp zwischen 1 kHz und 100 MHz liegen.

9. Vorrichtung nach irgendeinem der vorstehenden Patentansprüche, **dadurch gekennzeichnet, dass** der die Messvorrichtung (91) von |Fs-Fp| umfassende Synchronisierungsweg (90) auf dem Weg des Antwortsignals der Probe liegt.

10. Vorrichtung nach irgendeinem der vorstehenden Patentansprüche, **dadurch gekennzeichnet, dass** sie einen Separator (80) des Antwortsignals der Probe in zwei Pfade umfasst, wobei der Signalweg (51) auf einem Pfad und der Synchronisierungsweg (90) auf dem anderen Pfad liegt.

11. Vorrichtung nach irgendeinem der Patentansprüche 1 bis 8, **dadurch gekennzeichnet, dass** der Synchronisierungsweg (90) auf dem Pfad der "Pump" - Strahlen und der "Sonden" - Strahlen liegt.

12. Vorrichtung nach irgendeinem der vorstehenden Patentansprüche, **dadurch gekennzeichnet, dass** sie einen am Eingang des Photodetektionssystems (50) liegenden Filter (60) des von der Probe kommenden "Pump" - Strahls umfasst.

13. Vorrichtung nach irgendeinem der vorstehenden Patentansprüche, **dadurch gekennzeichnet, dass** sie einen am Ausgang des Photodetektionssystems (50) des Antwortsignals angeordneten Tiefpassfilter (55) umfasst.

14. Vorrichtung nach irgendeinem der vorstehenden Patentansprüche, **dadurch gekennzeichnet, dass** die Mischfrequenz |Fs-Fp| zwischen 1 Hz und 100 kHz liegt.

15. Vorrichtung nach irgendeinem der vorstehenden Patentansprüche, **dadurch gekennzeichnet, dass** die Laserquellen (10, 15) in der Lage sind, Impulse mit einer Dauer zwischen ungefähr 10fs und 10 Picosekunden auszusenden.

16. Vorrichtung nach irgendeinem der vorstehenden Patentansprüche, **dadurch gekennzeichnet, dass** sie eine zeitliche Auflösung aufweist, die im Wesentlichen gleich einer Picosekunde ist.

17. Vorrichtung nach irgendeinem der vorstehenden Patentansprüche, **dadurch gekennzeichnet, dass** sie eine Abtastvorrichtung (300) des "Pump" - Strahls und / oder des "Sonden" - Strahls auf der Probe (200) umfasst.

18. Vorrichtung nach irgendeinem der vorstehenden Patentansprüche, **dadurch gekennzeichnet, dass** die Abtastvorrichtung zwei Linsen (301, 302) und ein Element (303) zum Bewegen des oder der Strahlen umfasst.

19. Vorrichtung nach irgendeinem der vorstehenden Patentansprüche, **dadurch gekennzeichnet, dass** das Bewegungselement (303) eine Platine zur Translation einer Linse (301 oder 302) ist oder zwei galvanometrische Spiegel umfasst, die in der Lage sind, jeweils um zwei rechtwinklige Achsen zu schwenken.

20. Vorrichtung nach irgendeinem der Patentansprüche 17 bis 19, **dadurch gekennzeichnet, dass** die Abtastvorrichtung (300) in der Lage ist, den "Pump" - Strahl und den "Sonden" - Strahl zu bewegen und dass die Kombinierungsvorrichtung (20) diese Abtastvorrichtung umfasst.

21. Vorrichtung nach irgendeinem der Patentansprüche 17 bis 19, **dadurch gekennzeichnet, dass** die Abtastvorrichtung (300) in der Lage ist, den "Pump" - Strahl und den "Sonden" - Strahl zu bewegen und der Kombinierungsvorrichtung (20) nachgeschaltet angeordnet ist.

22. Vorrichtung nach Patentanspruch 17, **dadurch gekennzeichnet, dass** die Abtastvorrichtung (300) eine Platine zur Translation der Probe (200) umfasst.

23. Verfahren zur heterodynen optischen Abtastung mit Hilfe einer Vorrichtung, die ausgerüstet ist mit zwei Impulslaserquellen (10, 15), die ein Flackern aufweisen können, wobei die Quellen in der Lage sind , jeweils einen "Pump"- Strahl und einen "Sonden" - Strahl mit entsprechenden Wiederholungsfrequenzen Fs und Fp mit Fs ≠ Fp abzustrahlen, wobei das Verfahren folgendes umfasst: einen Schritt zur Kombinierung (20) der "Pump" - Strahlen und der "Sonden" - Strahlen , einen Schritt zum Senden der kombinierten "Pump" - und "Sonden" - Strahlen auf eine Probe (200), einen Schritt zur Photodetektion des Probenantwortsignals und einen Schritt zur Akquisition des erfassten Photosignals, **dadurch gekennzeichnet, dass** das Verfahren, bei dem Fs und Fp im Wesentlichen konstant sind, außerdem folgendes umfasst: einen Schritt zum Messen der Mischfrequenz |Fs-Fp|, um einen Übereinstimmungsaugenblick zwischen den Impulsen des "Pump" - Strahls und des "Sonden" - Strahls festzustellen und **da-**

**durch**, dass der Akquisitionsschritt in Abhängigkeit vom Übereinstimmungsaugenblick festgestellt wird.

24. Verfahren nach dem vorstehenden Patentanspruch, **dadurch gekennzeichnet, dass** es einen Schritt zum Unterwerfen einer Laserquelle unter eine andere umfasst.

25. Verfahren nach irgendeinem der Patentansprüche 23 bis 24, **dadurch gekennzeichnet, dass** die Mischfrequenz |Fs-Fp| im wesentlichen gleich τ Fs Fp ist , wobei τ die Dauer der Impulse des "Sonden" - Strahls ist.

26. Verfahren nach irgendeinem der Patentansprüche 23 bis 25, **dadurch gekennzeichnet, dass** die Antwort der Probe durch Reflexion oder Transmission der "Pump" - und "Sonden" - Strahlen erhalten wird.

27. Verfahren nach irgendeinem der Patentansprüche 23 bis 26, **dadurch gekennzeichnet, dass** es einen Abtastschritt des "Pump" - und / oder "Sonden" - Strahls auf der Probe (200) umfasst.

28. Verfahren nach irgendeinem der Patentansprüche 23 bis 27, **dadurch gekennzeichnet, dass** die "Pump" - und / oder "Sonden" - Strahlen überlagert sind.

29. Verfahren nach irgendeinem der Patentansprüche 23 bis 28, **dadurch gekennzeichnet, dass** die Probe ein Material aus Dünnschichten oder eine integrierte Schaltung oder ein Halbleiter oder eine biologische Zelle oder ein chemische Reagens ist.

30. Verfahren nach irgendeinem der Patentansprüche 23 bis 29, **dadurch gekennzeichnet, dass** die Probe eine zeitliche Auflösung in der Größenordnung der Picosekunde aufweist.

31. Verfahren nach irgendeinem der Patentansprüche 23 bis 30, **dadurch gekennzeichnet, dass** die Laserquellen in der Lage sind, Impulse mit einer Dauer von ungefähr 100 Ferntosekunden auszustrahlen.

32. Verfahren nach irgendeinem der Patentansprüche 23 bis 31, **dadurch gekennzeichnet, dass** die Mischfrequenz |Fs-Fp| zwischen 10 Hz und 100 kHz liegt.

33. Verfahren nach irgendeinem der Patentansprüche 23 bis 32, **dadurch gekennzeichnet, dass** die Wiederholungsfrequenzen Fs und Fp zwischen 0,1 MHz und 100 MHz liegen.

Train d'impulsions « pompe »

Retard « pompe-sonde » = $T_{ps}$

t (temps)

Réponse de l'échantillon

Réponses mesurées

t (temps)

Train d'impulsions « sonde »

t (temps)

FIG.1

FIG.2

Train d'impulsions « pompe »

$T_{ps}$ (t)

|Retard |
pompe-sonde

$Tp$

t (temps)

Train d'impulsions « sonde »

$Ts$

t (temps)

Réponse de l'échantillon

$Tp$     $Ts$

t (temps)

Réponses mesurées

Voie Signal

$Ts$

Voie Synchro.

t (temps transposé)

$Tp_{transposé} = 1/(F_p - F_s)$

# FIG.3

FIG.4

FIG.5

**FIG.6a**

Faisceau sonde

Faisceau pompe

Echantillon

**FIG.6b**

**FIG.7a**

Faisceau
sonde

$\theta 1$

$\varphi 1$

303

300

301

302

22

30

Faisceau pompe

Echantillon

200

**FIG.7b**

FIG.8a

Faisceau sonde

Faisceau pompe

Echantillon

FIG.8b

FIG.9a

Faisceau sonde

Faisceau pompe

Echantillon

FIG.9b

FIG.10a

Faisceau sonde, Faisceau pompe

Echantillon

FIG.10b

## RÉFÉRENCES CITÉES DANS LA DESCRIPTION

**Documents brevets cités dans la description**

- US 5778016 A

**Littérature non-brevet citée dans la description**

- **ROSSIGNOL et al.** *Journal of Applied Physics,* 2004, vol. 95 (8), 4157

- **CÔTE et al.** *Review of Scientific Instruments,* 2005, vol. 76, 053906